# FASCICULE DE BREVET EUROPEEN

(11) **EP 3 354 438 B1**
(45) Date de publication et mention de la délivrance du brevet: **13.05.2020**
(21) Numéro de dépôt: 18154054.3
(22) Date de dépôt: 30.01.2018
(51) Int. Cl.: B29C 45/14, B29C 31/08, B25J 15/00

(54) **PROCÉDÉ DE PRODUCTION D'UNE PIÈCE**
HERSTELLUNGSVERFAHREN EINES WERKSTÜCKS
METHOD FOR PRODUCING A PART

(30) Priorité: 30.01.2017 FR 1750722
(43) Date de publication de la demande: 01.08.2018
(73) Titulaire: Flex-N-Gate France, 25405 Audincourt (FR)
(72) Inventeur: COMPAGNON, Philippe, 25700 Valentigney (FR); RECEVEUR, Thierry, 25310 Villars les Blamont (FR)
(74) Mandataire: Lavoix

(56) Documents cités:
- WO-A1-2015/151054
- DE-A1-102011 050 102

## Description

La présente invention concerne un procédé de production d'une pièce comportant au moins un élément de renfort fabriqué à partir d'un insert fibreux en matériau composite, utilisant un moule d'injection comprenant une première partie et une deuxième partie, chacune comprenant une surface de moulage, lesdites surfaces de moulage définissant entre elles une cavité de moulage présentant la forme de la pièce à produire, le procédé comprenant les étapes suivantes :
- transport et positionnement de l'insert fibreux sur la première partie du moule d'injection par au moins un élément de préhension d'un dispositif de préhension, le dispositif de préhension comprenant en outre une paroi de formage, l'élément de préhension étant actionnable entre une configuration inactive, dans laquelle il n'interagit pas avec l'insert fibreux, et une configuration active, dans laquelle il est apte à maintenir l'insert fibreux sur le dispositif de préhension, l'élément de préhension étant en configuration active au cours du transport et du positionnement ;
- mise en forme de l'insert fibreux en l'élément de renfort contre la surface de moulage de la première partie ; et
- injection d'un matériau plastique dans le moule d'injection, telle que l'élément de renfort est surmoulé par le matériau plastique et la pièce est produite.

L'ajout d'un insert fibreux dans une pièce permet d'améliorer les propriétés mécaniques de la pièce tout en réduisant la quantité de matière plastique nécessaire. On peut ainsi réduire la masse de la pièce tout en augmentant sa résistance mécanique. Un insert fibreux peut être simplement mis en forme et être lié de façon intime au matériau plastique le surmoulant.

Un tel procédé est connu notamment du document EP 3 034 265 et est typiquement destiné à produire une pièce de renfort et/ou d'aspect pour l'automobile ou les camions. Le procédé décrit dans ce document consiste à utiliser un dispositif de préhension ainsi que des cales particulières dans le moule d'injection pour permettre le positionnement précis de l'insert fibreux sur la première partie du moule d'injection, sa mise en forme et assurer son maintien pour garantir le surmoulage sur la face adéquate.

Le document DE102011050102 divulgue un procédé de production d'une pièce comportant au moins un élément de renfort fabriqué à partir d'un insert fibreux en matériau composite.

Cependant, l'utilisation de cales particulières pour assurer le maintien de l'insert fibreux dans le moule ne permet pas d'optimiser la forme de l'insert fibreux. De plus, cela conduit à une plus grande complexité dans la conception du moule, celui-ci devant nécessairement comprendre des moyens de fixation de l'insert adaptés à différentes tailles et épaisseurs d'insert. La présence de cales pouvant être à l'origine de défauts d'aspect, le fait de les supprimer améliore la qualité de la production. Enfin, la présence de cales particulières présente un surcoût en termes d'achat et de maintenance.

Une autre solution consiste à mettre en forme l'insert fibreux entre les surfaces de moulages des deux parties du moule. Or la surface de moulage de la deuxième partie présente typiquement la texture que la pièce est destinée à présenter en surface, et l'insert fibreux comporte des fibres, par exemple en verre. Ainsi, lors de la mise en forme répétée d'inserts fibreux par la deuxième partie, le contact répété des fibres des inserts avec la surface de moulage de la deuxième partie use et endommage cette surface de moulage ce qui conduit à des défauts d'aspect dans la surface de la pièce.

L'invention a donc pour but de proposer un procédé de production d'une pièce permettant d'obtenir une pièce présentant des caractéristiques mécaniques homogènes, suffisantes, et reproductibles ainsi qu'une surface sans défaut d'aspect et des épaisseurs de surmoulage reproductibles, en conservant un temps de cycle compatible avec la production de pièces en grande série.

A cet effet, l'invention a pour objet un procédé de production caractérisé en ce qu'il comprend les étapes suivantes :
au cours du positionnement de l'insert fibreux sur la surface de moulage de la première partie : approche de l'insert fibreux de la surface de moulage de la première partie en maintenant un écart entre ladite surface de moulage et l'insert fibreux ; et déplacement de la paroi de formage par rapport à l'élément de préhension de sorte à appliquer l'insert fibreux contre au moins une partie de la surface de moulage ; et,
au cours de la mise en forme de l'insert fibreux : application de la paroi de formage et de l'élément de préhension contre l'insert fibreux et la surface de moulage de la première partie, de sorte que l'insert fibreux acquiert la forme de la surface de moulage, l'élément de préhension étant actionné de sa configuration active à sa configuration inactive avant ladite application de la paroi de formage.

Le procédé fonctionne avec tout type d'insert fibreux et avec tout type de matériau plastique pour l'étape d'injection.

Le positionnement de l'insert fibreux est aussi plus précis, et le procédé permet de mettre en forme l'élément de renfort tel qu'il sera présent dans la pièce produite.

La deuxième partie du moule d'injection ne réalisant pas la mise en forme de l'insert, elle n'est pas endommagée lors de la production de la pièce, ce qui permet aussi de préserver de manière notable l'aspect final de la pièce.

Le procédé permet d'utiliser différentes épaisseurs pour l'insert fibreux sans difficultés majeures. Plus encore, il permet d'utiliser un entrefer identique dans le moule d'injection pour différentes épaisseurs d'inserts fibreux. Il est donc possible de modifier l'épaisseur de l'insert fibreux après la réalisation du moule d'injection si le besoin s'en fait sentir, par exemple pour augmenter ou diminuer les performances mécaniques de la pièce. En variante, la distance entre la deuxième partie du moule et le dessus de l'insert fibreux est contrôlée et permet d'obtenir un état de surface final homogène et de qualité satisfaisante pour une pièce d'aspect.

De plus, un seul dispositif de préhension réalisant toutes les étapes du procédé, mise à part l'étape d'injection, le coût de l'installation et la surface au sol qu'il lui est nécessaire sont réduits.

Le procédé de production peut comprendre une ou plusieurs des caractéristiques optionnelles suivantes, prises isolément ou selon toutes les combinaisons techniquement possibles :
- le procédé comprend une étape de maintien de l'insert fibreux contre la surface de moulage de la première partie du moule d'injection, ce maintien étant assuré par l'élément de préhension avant l'étape de mise en forme, et par la paroi de formage au cours de l'étape de mise en forme ;
- la paroi de formage présente une surface de forme sensiblement complémentaire d'au moins une partie de la surface de moulage de la première partie ; et
- l'élément de préhension comporte un organe de préhension de l'insert fibreux, mobile entre une position rétractée, dans la configuration inactive de l'élément de préhension, et une position de retenue, dans la configuration active de l'élément de préhension, l'organe de préhension fixant l'insert fibreux sur l'élément de préhension en position de retenue ;

Un tel procédé de production permet de s'affranchir d'un système de fixation de l'insert fibreux intégré au moule d'injection, ce qui permet des économies sur le coût du moule d'injection et une conception plus libre de la pièce. S'affranchir d'un système de fixation de l'insert fibreux intégré au moule d'injection conduit aussi à une optimisation plus poussée de la surface d'insert fibreux utilisée et donc à un gain en coût.

Avantageusement, le procédé comporte le transport et le positionnement d'au moins un insert métallique sur la surface de moulage de la première partie de moule d'injection avant le positionnement de l'insert fibreux sur la surface de moulage de la première partie.

Le procédé selon l'invention facilite l'utilisation d'inserts métalliques, et permet en particulier d'utiliser des inserts métalliques adaptés à l'insert fibreux, c'est-à-dire des inserts métalliques ne nécessitant pas de faire des trous supplémentaires pour leur montage dans l'insert fibreux. Les performances mécaniques de la pièce ne sont donc pas détériorées par les inserts métalliques.

De préférence, le procédé comporte une étape de régulation de la température du dispositif de préhension.

Avantageusement, le procédé comporte le chauffage de l'insert fibreux avant sa mise en forme, et le refroidissement de l'insert fibreux après sa mise en forme et avant l'étape d'injection d'un matériau plastique dans le moule d'injection.

La régulation en température du dispositif de préhension permet de garantir la température de l'insert fibreux lors du surmoulage et donc d'optimiser l'adhérence de la matière plastique surmoulée sur l'insert fibreux. Les performances mécaniques de la pièce sont donc optimisées et contrôlées.

Avantageusement, le procédé comporte, au cours de la mise en forme de l'insert fibreux, une étape d'application d'une pression de formage sur l'insert fibreux par un système additionnel d'application d'une pression complémentaire sur le dispositif de préhension.

De préférence, au cours du positionnement de l'insert fibreux, l'insert fibreux est maintenu à l'écart de la surface de moulage pendant le déplacement de la paroi de formage.

Avantageusement, au cours du positionnement de l'insert fibreux, la région de l'insert fibreux en regard de chaque élément de préhension est maintenue à l'écart de la surface de moulage pendant le déplacement de la paroi de formage.

L'invention concerne également un dispositif de préhension pour le transport, le positionnement et la mise en forme d'un insert fibreux pour le procédé tel que défini ci-dessus, le dispositif de préhension comprenant un élément de préhension et une paroi de formage, l'élément de préhension étant actionnable entre une configuration inactive, dans laquelle il n'interagit pas avec l'insert fibreux, et une configuration active, dans laquelle il est apte à maintenir l'insert fibreux sur le dispositif de préhension ; l'élément de préhension et la paroi de formage du dispositif de préhension étant mobiles l'un par rapport à l'autre, l'élément de préhension traversant la paroi de formage.

Le dispositif de préhension peut comprendre une ou plusieurs des caractéristiques optionnelles suivantes, prises isolément ou selon toutes les combinaisons techniquement possibles :
- le dispositif de préhension présente une configuration de formage dans laquelle l'élément de préhension et la paroi de formage définissent une surface de formage continue ;
- l'élément de préhension comporte un organe de préhension de l'insert fibreux, mobile entre une position rétractée, dans la configuration inactive de l'élément de préhension, et une position de retenue, dans la configuration active de l'élément de préhension, l'organe de préhension fixant l'insert fibreux sur l'élément de préhension en position de retenue ; et,
- l'organe de préhension comprend des aiguilles destinées à traverser l'insert fibreux.

L'invention et ses avantages seront mieux compris à la lecture de la description qui va suivre, donnée uniquement à titre d'exemple, et faite en référence aux dessins annexés, sur lesquels :
- la figure 1 est une vue schématique en coupe d'une pièce produite par le procédé de production selon l'invention ;
- les figures 2 à 8 sont des vues schématiques en coupe d'une installation de production au cours d'étapes du procédé de production selon l'invention de la pièce de la figure 1 ; et
- la figure 9 est une vue schématique en coupe d'une variante de l'installation des figures 2 à 8.

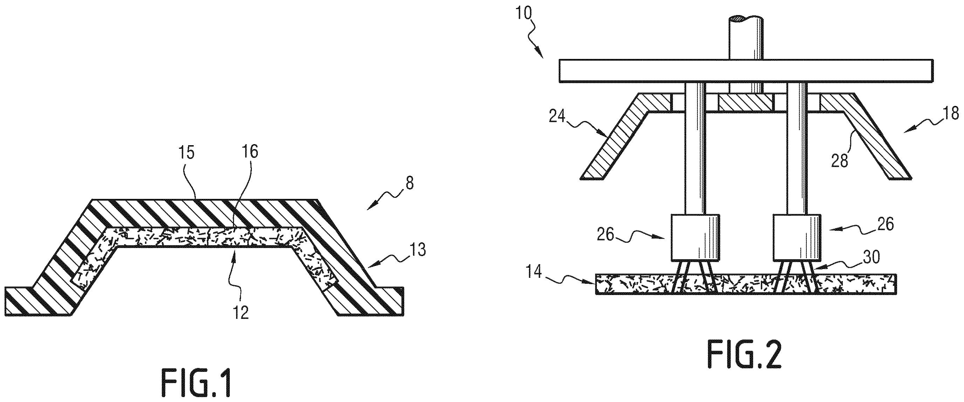

Sur la figure 1 est illustré un exemple d'une pièce 8 produite par le procédé de production selon l'invention, ce procédé étant mis en oeuvre par l'installation 10 illustrée sur les figures 2 à 8.

Plus précisément, la pièce 8 est par exemple une pièce de renfort et/ou d'aspect telle qu'une pièce de carrosserie. Par pièce de renfort, on entend plus généralement une pièce destinée à être assemblée à une autre pièce d'un véhicule pour la renforcer. Par pièce d'aspect, on entend plus généralement une pièce dont au moins une partie est destinée à être visible de l'intérieur et/ou de l'extérieur d'un véhicule.

La pièce 8 comprend au moins un élément de renfort 12 surmoulé par un corps plastique 13. Le surmoulage du corps plastique 13 est mis en oeuvre par injection d'une matière plastique sur l'élément de renfort 12 dans un moule d'injection tel que décrit dans la suite. La pièce 8 représentée sur la figure 1 n'est montrée qu'à titre d'exemple et pourrait avoir tout type de forme. Par exemple, le corps plastique 13 pourrait comprendre des nervures, des fûts de vissage, etc.

L'élément de renfort 12 présente par exemple une forme en trois dimensions telle que, par exemple, une forme de cuvette, ou une section parabolique ou en forme de U ou autre. La forme de l'élément de renfort 12 dépend principalement de la pièce 8 à produire.

L'élément de renfort 12 est utilisé pour améliorer la tenue mécanique de la pièce 8 à produire et pour augmenter sa rigidité, de telle sorte que la pièce 8 à produire soit en mesure de soutenir une charge prédéterminée.

L'élément de renfort 12, visible sur les figures 1, 7 et 8, est fabriqué à partir d'un insert fibreux 14 mélangé à une matrice d'un matériau plastique, visible sur les figures 2 à 6.

L'insert fibreux 14 comprend par exemple un tissu ou une pluralité de tissus d'un matériau composite comprenant des fibres unidirectionnelles et continues ou des fibres ou des mèches tissées ensemble suivant une direction ou deux directions perpendiculaires. Les fibres sont par exemple des fibres de verre, ou en variante des fibres de carbone ou tout autre type de fibres. Le tissu est par exemple composé d'un assemblage mixte de fibres d'origines différentes, tel qu'un assemblage de fibres de verre et de fibres de carbone ou un assemblage de fibres de carbone et de fibres de kevlar. Les fibres sont par exemple pré-imprégnées ou non.

Le matériau plastique de la matrice de l'insert fibreux 14, est par exemple du propylène ou du polyamide. La matière plastique de la matrice est par exemple la même que celle utilisée pour réaliser le corps plastique 13, ce qui améliore les liaisons entre l'insert 14 et le corps 13.

Le corps plastique 13 forme une surface extérieure principale 15 de la pièce 8 et recouvre une surface extérieure 16 de l'élément de renfort 12. Une fois la pièce 8 montée dans le véhicule, la surface extérieure principale 15 est la surface destinée à être vue depuis l'intérieur et/ou l'extérieur du véhicule.

La surface extérieure principale 15 est par exemple grainée, c'est-à-dire qu'elle présente des aspérités formant un motif régulier ou non totalement ou en partie grainée.

Le corps plastique 13 est par exemple plus étendu que l'élément de renfort 12, l'élément de renfort 12 s'étendant alors seulement sur une région du corps plastique 13 et non sur tout le corps plastique 13. En variante, l'élément de renfort 12 s'étend sur tout le corps plastique 13.

Le corps plastique 13 présente une épaisseur par exemple constante, la pièce 8 présentant une épaisseur, au droit de l'élément de renfort 12, supérieure à l'épaisseur du corps plastique 13. En variante, la pièce 8 présente une épaisseur, au droit de l'élément de renfort 12, supérieure ou inférieure à l'épaisseur du corps plastique 13. Dans une autre variante, l'épaisseur du corps plastique 13 est adaptée pour que l'épaisseur de la pièce 8 soit constante. Dans encore une autre variante, l'épaisseur de la pièce 8 est variable.

Dans un mode de réalisation, la pièce 8 comprend une pluralité d'éléments de renfort 12 distribués sur des régions de la pièce 8, et espacés les uns des autres ou liés ensemble. La pièce 8 comprend par exemple des nervures, des points de fixation d'un insert métallique et autres.

L'installation 10 comprend un dispositif de chauffage de l'insert fibreux 14, un moule d'injection 17 et un dispositif de préhension 18.

Le dispositif de chauffage de l'insert fibreux 14 est configuré pour chauffer l'insert fibreux 14 au-delà d'une température de chauffage prédéterminée.

La température de chauffage prédéterminée dépend du nombre de tissus formant l'insert fibreux 14 et de la nature de la matrice de l'insert fibreux 14.

La température de chauffage prédéterminée est supérieure à la température de fusion de la matrice de l'insert fibreux 14.

Le dispositif de chauffage de l'insert fibreux 14 est configuré pour chauffer l'insert fibreux 14 de manière homogène sur toute l'étendue de l'insert fibreux 14. Un tel chauffage permet de rendre l'insert fibreux 14 malléable pour permettre la mise en forme tridimensionnelle de l'insert fibreux 14.

Le dispositif de chauffage est par exemple un four.

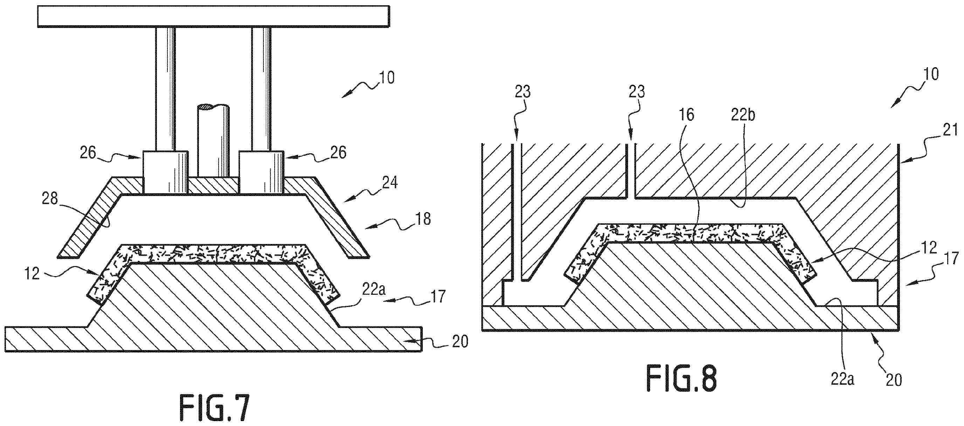

Le moule d'injection 17 comprend une première partie 20, visible sur les figures 2 à 8, et une deuxième partie 21, visible sur la figure 8. Chacune de la première partie 20 et de la deuxième partie 21 comprend une surface de moulage, respectivement 22a, 22b. Les surfaces de moulage 22a, 22b sont analogues et s'étendent en regard l'une de l'autre.

La première partie 20 est ici destinée à accueillir l'insert fibreux 14. La première partie 20 est en outre destinée à la mise en forme de l'insert fibreux 14 en élément de renfort 12.

La première partie 20 et/ou la deuxième partie 21 comprend une ou une pluralité d'entrée(s) d'injection 23 du matériau plastique formant le corps plastique 13 de la pièce 8 à produire.

Dans l'exemple de la figure 8, la première partie 20 comprend une entrée d'injection 23 débouchant en regard de l'élément de renfort 12. Lorsque le corps plastique 13 est destiné à présenter une surface extérieure principale 15 grainée, la surface de moulage 22b de la deuxième partie 21 est alors grainée. Plus généralement, la surface de moulage 22b de la deuxième partie 21 présente la texture que la surface extérieure principale 15 est destinée à présenter.

La première partie 20 et la deuxième partie 21 sont mobiles l'une par rapport à l'autre entre une position ouverte du moule d'injection 17, illustrée sur les figures 2 à 7, dans laquelle la deuxième partie 21 est disposée à l'écart de la première partie 20, et une position fermée du moule d'injection 17, illustré sur la figure 8, dans laquelle les surfaces de moulage 22a, 22b définissent entre elles une cavité de moulage présentant la forme de la pièce 8 à produire.

Lorsque le moule d'injection 17 est dans sa position ouverte, les surfaces de moulage 22a, 22b sont accessibles pour positionner des éléments dans le moule d'injection 17 ou retirer des éléments du moule d'injection 17, comme illustré sur les figures 2 à 7.

Le moule d'injection 17 peut être de tout type. Dans l'exemple de la figure 8, le moule d'injection 17 comprend un plan de joint entre la première partie 20 et la deuxième partie 21. En variante non représentée, le moule d'injection 17 comprend une chambre de compression permettant de faire varier l'écartement entre les surfaces de moulage 22a, 22b, lorsque le moule d'injection 17 est en position fermée.

De tels moules d'injection 17 sont connus de l'état de la technique et ne seront pas décrits plus en détail par la suite.

L'insert fibreux 14 est destiné à être positionné et maintenu sur une partie de la surface de moulage 22a de la première partie 20.

Avantageusement, le maintien de l'insert fibreux 14 contre la surface de moulage 22a de la première partie 20 est assuré uniquement par le dispositif de préhension 18.

Plus précisément, le moule d'injection 17 est par exemple dépourvu de système de fixation de l'insert fibreux 14 sur le moule d'injection 17. En variante, le moule d'injection 17 comprend un tel système de fixation, qui est par exemple un dispositif d'aspiration, ou un dispositif comportant des pointes ou des aiguilles permettant le maintien de l'insert fibreux 14 lors de sa mise en forme.

Le dispositif de préhension 18 est destiné au transport, au positionnement et à la mise en forme de l'insert fibreux 14.

Le dispositif de préhension 18 est mobile par rapport au dispositif de chauffage et au moule d'injection 17. Le dispositif de préhension 18 est ainsi par exemple monté sur un robot cartésien ou un robot multi-axial permettant des déplacements selon plusieurs directions du dispositif de préhension 18.

Le dispositif de préhension 18 comprend une paroi de formage 24 et un élément de préhension 26. En outre, le dispositif de préhension 18 comprend par exemple un système de transport et de positionnement d'au moins un insert métallique (non représenté).

La paroi de formage 24 présente une surface 28 tournée vers la surface de moulage 22a de la première partie 20 de forme sensiblement complémentaire à la forme que l'élément de renfort 12 présente dans la pièce 8, une fois la pièce 8 produite. En particulier, la paroi de formage 24 présente une surface 28 de forme sensiblement complémentaire d'au moins la partie de la surface de moulage 22a de la première partie 20 sur laquelle l'insert fibreux 14 doit être positionné.

Le dispositif de préhension 18 comprend par exemple une pluralité d'éléments de préhension 26 répartis pour permettre la préhension en plusieurs points de l'insert fibreux 14. Dans l'exemple des figures 2 à 7, le dispositif de préhension 18 comprend deux éléments de préhension 26.

Comme illustré sur les figures 2 à 7, chaque élément de préhension 26 traverse la paroi de formage 24.

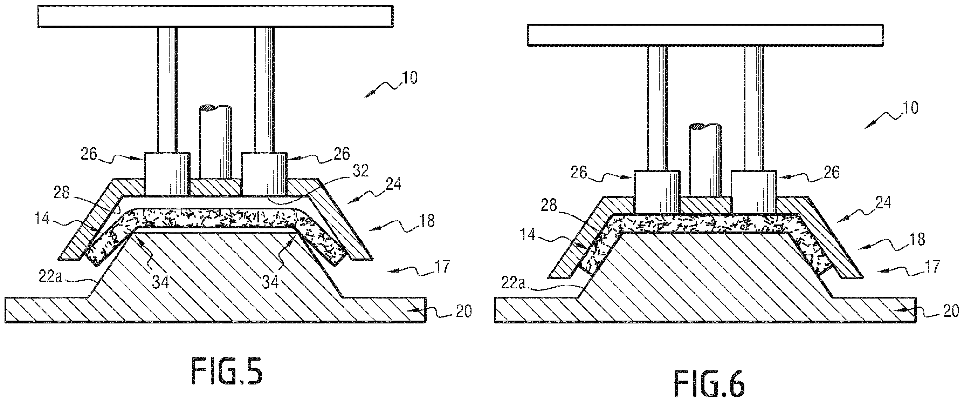

Chaque élément de préhension 26 est actionnable entre une configuration active, illustrée sur les figures 2 à 4, dans laquelle il est apte à maintenir l'insert fibreux 14 sur le dispositif de préhension 18, et une configuration inactive, illustrée sur les figures 5 à 7, dans laquelle il n'interagit pas avec l'insert fibreux 14, c'est-à-dire que l'élément de préhension 26 ne retient pas l'insert 14 en configuration inactive.

Chaque élément de préhension 26 comprend au moins un organe de préhension 30 de l'insert fibreux 14. L'organe de préhension 30 est mobile entre une position rétractée, dans la configuration inactive de l'élément de préhension 26, dans laquelle il n'interagit pas avec l'insert fibreux 14 ; et une position de retenue, dans la configuration active de l'élément de préhension 26, dans laquelle l'organe de préhension 30 fixe l'insert fibreux 14 sur l'élément de préhension 26.

Dans l'exemple des figures 2 à 4, l'élément de préhension 26 comprend plusieurs organes de préhension 30 formés chacun par une aiguille destinée à traverser l'insert fibreux 14. En variante, l'organe de préhension 30 est formé par un dispositif d'aspiration, une ventouse ou un système Venturi, ou autre.

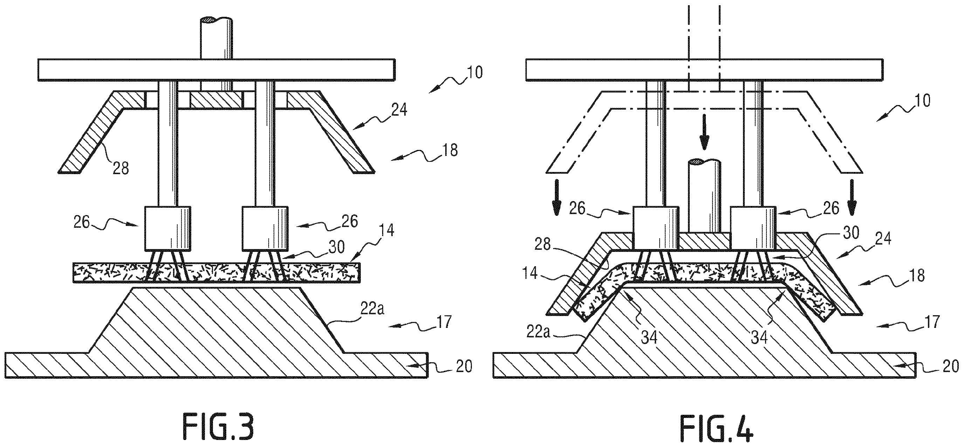

Chaque élément de préhension 26 et la paroi de formage 24 du dispositif de préhension 18 sont mobiles indépendamment l'un par rapport à l'autre. En particulier, la paroi de formage 24 est mobile par rapport à chaque élément de préhension 26 entre une position éloignée, visible sur les figures 2 et 3, et une position de formage, visible sur les figures 5 à 7.

Dans la position éloignée, la paroi de formage 24 est disposée à l'écart de chaque élément de préhension 26.

Dans la position de formage de la paroi de formage 24, et lorsque l'organe de préhension 30 de chaque élément de préhension 26 est en position rétractée, chaque élément de préhension 26 et la paroi de formage 24 définissent une surface de formage 32 continue. Par continue, on entend que la surface de formage 32 est sans interruption.

Cette position de formage de la paroi de formage 24 associée aux positions rétractées de chaque organe de préhension 30 constitue une configuration de formage du dispositif de préhension 18.

La surface de formage 32 est destinée à mettre en forme l'insert fibreux 14, de sorte à ce qu'il acquiert la forme de l'élément de renfort 12. La surface de formage 32 est destinée à s'appliquer sur toute la surface de l'insert fibreux 14 disposée en regard du dispositif de préhension 18.

Le dispositif de préhension 18 est configuré pour exercer sur l'insert fibreux 14, contre la surface de moulage 22a de la première partie 20, une pression de formage comprise par exemple entre 10 bar et 20 bar en configuration de formage.

Le dispositif de préhension 18 est configuré pour exercer sur l'insert fibreux 14, contre la surface de moulage 22a de la première partie 20, une pression de maintien de l'insert fibreux 14 apte à maintenir en position l'insert fibreux 14 sur la surface de formage 32.

Ainsi, il n'est pas nécessaire de prévoir d'éléments de retenue dans la première partie du moule.

Le système de transport et de positionnement d'au moins un insert métallique est mobile par rapport à chaque élément de préhension 26 et à la paroi de formage 24.

Le système de transport et de positionnement est configuré pour maintenir de manière libérable un insert métallique, ou une pluralité d'inserts métalliques, sur le dispositif de préhension 18.

Le système de transport et de positionnement est aussi configuré pour positionner chaque insert métallique contre la surface de moulage 22a de la première partie 20.

Chaque insert métallique est destiné par exemple à permettre, une fois surmoulé par la pièce 8, la fixation d'éléments supplémentaires sur la pièce 8 ou le montage de la pièce 8 dans un véhicule.

Le dispositif de préhension 18 permet la mise en oeuvre d'un procédé de production d'une pièce 8 décrit ci-dessous.

Un procédé de production d'une pièce 8 au moyen de l'installation 10 de production décrite plus haut va maintenant être décrit, en références aux figures 2 à 8.

Le procédé comprend la fourniture d'un insert fibreux 14 et par exemple, la fourniture d'un insert métallique.

Le moule d'injection 17 est initialement en position ouverte et est maintenu en position ouverte jusqu'à la fin de la mise en forme de l'insert 14. La surface de moulage 22b de la deuxième partie 21 du moule 17 n'est pas mise en contact avec l'insert 14 au cours du procédé de production, ce qui préserve la deuxième partie 21 de l'usure associée à des mises en forme répétées d'inserts fibreux 14.

L'insert fibreux 14 est chauffé dans le dispositif de chauffage, au-delà de la température de chauffage prédéterminée.

Comme illustré sur les figures 2 et 3, le procédé comprend une étape de transport et positionnement de l'insert fibreux 14 sur la première partie 20 du moule d'injection 17 par les éléments de préhension 26 du dispositif de préhension 18.

Au cours de cette étape de transport et de positionnement, le dispositif de préhension 18 est déplacé au-dessus de l'insert 14 chauffé, et chaque élément de préhension 26 est placé en configuration active de sorte à pouvoir transporter l'insert 14.

Un autre insert fibreux 14 est placé dans le dispositif de chauffage.

L'insert métallique est aussi transporté et positionné, par le système de transport et de positionnement, sur la surface de moulage 22a de la première partie 20 du moule d'injection 17, avant le positionnement de l'insert fibreux 14 sur la surface de moulage 22a de la première partie 20.

Pour cela, chaque élément de préhension 26 est en configuration active au cours du transport et du positionnement de l'insert fibreux 14. Plus précisément, chaque organe de préhension 30 est en position de retenue et fixe l'insert fibreux 14 sur l'élément de préhension 26.

Au cours du positionnement de l'insert fibreux 14 sur la surface de moulage 22a de la première partie 20, l'insert fibreux 14 est approché de la surface de moulage 22a de la première partie 20 en maintenant un écart entre ladite surface de moulage 22a et l'insert fibreux 14.

L'insert fibreux 14 est maintenu en position par chaque organe de préhension 30 en configuration de retenue.

Chaque organe de préhension 30 reste à l'écart de la surface de moulage 22a de la première partie 20 pendant toute la durée du procédé de production. Il n'y a pas d'endommagement de la surface de moulage 22a de la première partie 20 par les organes de préhension 30, ni endommagement des organes de préhension 30.

Comme illustré sur la figure 4, la paroi de formage 24 est alors déplacée par rapport à l'élément de préhension 26 vers la première partie 20.

Lors de son déplacement, la paroi de formage 24 est appliquée sur une région périphérique de l'insert fibreux 14 qui se déforme vers la surface de moulage 22a de la première partie 20. Pendant cette déformation, l'écart entre la surface de moulage 22a et l'insert fibreux 14 est maintenu par les organes de préhension 30.

De préférence, au cours du positionnement de l'insert fibreux 14, l'insert fibreux 14 est maintenu à l'écart de la surface de moulage 22a pendant le déplacement de la paroi de formage 24.

L'insert fibreux 14 est déformé jusqu'à présenter au moins une région de contact 34 avec la surface de moulage 22a de la première partie 20 comme illustré sur la figure 4. Le déplacement de la paroi de formage 24 est alors arrêté.

L'insert fibreux 14 est ainsi préformé et est maintenu en position par les organes de préhension 30 et par la paroi de formage 24 exerçant la pression de maintien contre la surface de moulage 22a de la première partie 20.

Avantageusement, au cours du positionnement de l'insert fibreux 14, la région de l'insert fibreux 14 en regard de chaque élément de préhension 26 est maintenue à l'écart de la surface de moulage 22a pendant le déplacement de la paroi de formage 24.

Cette caractéristique, ainsi que celle du maintien de l'insert fibreux 14 à l'écart de la surface de moulage 22a, permettent respectivement de garantir notamment une absence d'endommagement de la surface de moulage 22a de la première partie 20 par les organes de préhension 30, et une absence d'endommagement des organes de préhension 30.

Le procédé comprend ensuite la mise en forme de l'insert fibreux 14 en l'élément de renfort 12 contre la surface de moulage 22a de la première partie 20 (figures 5 à 7).

Avant la mise en forme de l'insert fibreux 14, l'élément de préhension 26 est actionné de sa configuration active à sa configuration inactive, comme illustré sur la figure 5. On évite ainsi les contacts entre la surface de moulage 22a et les organes de préhension 30, qui pourraient endommager la surface de moulage 22a de la première partie 20.

L'insert fibreux 14 est alors maintenu en position uniquement par la paroi de formage 24 exerçant la pression de maintien contre la surface de moulage 22a de la première partie 20.

La paroi de formage 24 est déplacée, par rapport à chaque élément de préhension 26, jusqu'à sa position de formage.

Chaque élément de préhension 26 et la paroi de formage 24 définissent alors la surface de formage 32 continue.

La surface de formage 32 est déplacée vers la surface de moulage 22a de la première partie 20.

La paroi de formage 24, et plus particulièrement la surface de formage 32, est appliquée contre l'insert fibreux 14 et la surface de moulage 22a de la première partie 20, comme illustré sur la figure 6, de sorte que l'insert fibreux 14 acquiert la forme de la surface de moulage 22a.

Plus particulièrement, la surface de formage 32 est appliquée sur toute la surface de l'insert fibreux 14 disposée en regard du dispositif de préhension 18.

L'insert fibreux 14 est refroidi après sa mise en forme, pendant un temps prédéterminé, de sorte que la matrice durcisse et que l'élément de renfort 12 demeure rigide dans la forme qu'il a acquise. Avantageusement, la surface de formage 32 est appliquée sur l'élément de renfort 12 pendant le refroidissement.

Le dispositif de préhension 18 est ensuite déplacé à l'écart de la surface de moulage 22a de la première partie 20.

Le moule d'injection 17 est ensuite disposé en position fermée, comme illustré sur la figure 8.

Le procédé comporte alors l'injection d'un matériau plastique dans la cavité de moulage, notamment par l'entrée d'injection 23 débouchant en regard de l'élément de renfort 12, telle que l'élément de renfort 12 est surmoulé par le matériau plastique et la pièce 8 est produite.

Après un temps prédéterminé, le moule d'injection 17 est disposé en position ouverte et la pièce 8 est extraite hors du moule d'injection 17, par exemple par le dispositif de préhension 18.

Le procédé selon l'invention recommence alors à l'étape de transport et positionnement de l'insert fibreux 14.

En variante, le dispositif de préhension 18 est régulé en température.

Le dispositif de préhension 18 est alors configuré pour maintenir l'insert 14 dans un état malléable pendant le transport.

En variante, l'insert fibreux 14 est malléable à température ambiante. Le procédé de production ne requiert alors pas le chauffage de l'insert fibreux 14.

En variante, lorsque le moule d'injection 17 est disposé en position ouverte, la pièce 8 produite est maintenue sur la deuxième partie 21 du moule d'injection 17 et est saisie ultérieurement par le dispositif de préhension 18 lors de l'étape de mise en forme d'un autre insert fibreux 14.

La deuxième partie 21 du moule d'injection 17 comprend un dispositif non représenté de maintien de la pièce 8 sur la deuxième partie 21.

Ce dispositif de maintien est actionnable entre une configuration de libération, dans laquelle le dispositif de maintien n'interagit pas avec la pièce 8, et une configuration de maintien, dans laquelle le dispositif de maintien est apte à maintenir la pièce 8 contre la surface de moulage 22b de la deuxième partie 21 du moule d'injection 17.

Ce dispositif de maintien est par exemple un dispositif d'aspiration, tel qu'une ventouse.

Le dispositif de préhension 18 est configuré pour saisir une pièce 8 produite lors d'un précédent procédé et maintenue sur la deuxième partie 21 par le dispositif de maintien en configuration de maintien, lors de l'étape de mise en forme de l'insert fibreux 14.

En particulier, le dispositif de préhension 18 comporte un équipement de préhension apte à saisir une pièce 8 maintenue contre la surface de moulage 22b de la deuxième partie 21.

Le procédé comporte, au cours de la mise en forme de l'insert fibreux 14, une étape de saisie, par l'équipement de préhension du dispositif de préhension 18, d'une pièce 8 produite lors d'un précédent procédé et maintenue contre la deuxième partie 21 du moule d'injection 17 par le dispositif de maintien en configuration de maintien.

L'étape de saisie est suivie du passage du dispositif de maintien de sa configuration de maintien à sa configuration de libération. La pièce 8 n'est donc alors plus maintenue sur la deuxième partie 21.

Lorsque le dispositif de préhension 18 est déplacé à l'écart de la surface de moulage 22a de la première partie 20, le dispositif de préhension 18 transporte la pièce 8 saisie à l'étape de saisie par l'équipement de préhension, jusqu'à une position donnée où la pièce 8 saisie est déposée.

Un tel procédé permet de réduire le temps de production.

En variante, l'installation 10 comprend un système additionnel d'application d'une pression de formage sur l'insert fibreux 14. Un tel système additionnel permet d'assurer une pression de formage suffisante sur l'insert fibreux 14 afin de réaliser sa mise en forme.

Plus particulièrement, le système additionnel est configuré pour appliquer une pression complémentaire sur le dispositif de préhension 18, en particulier sur la paroi de formage 24 et/ou sur un élément de préhension 26.

Lors de la mise en forme de l'insert fibreux 14 et en particulier lorsque la surface de formage 32 est appliquée contre l'insert fibreux 14, le procédé comporte alors une étape d'application d'une pression de formage sur l'insert fibreux 14 par le système additionnel.

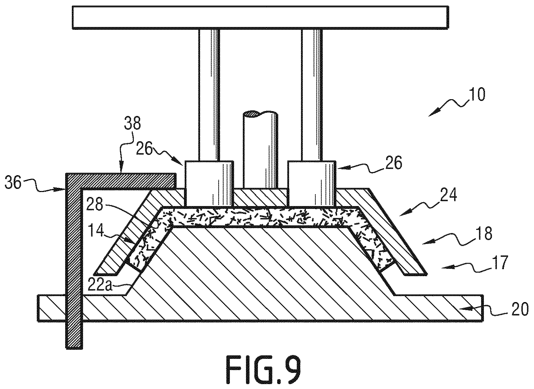

Dans un premier mode de réalisation de cette variante, illustré sur la figure 9, le système additionnel comprend au moins une mâchoire 36 amovible comprenant un bras 38 apte à être disposé au-dessus de la paroi de formage 24 et/ou au-dessus d'un élément de préhension 26.

La mâchoire 36 est apte à être disposée à l'écart du dispositif de préhension 18 pour assurer un déplacement libre de la paroi de formage 24 et des éléments de préhension 26 par rapport à la première partie 20.

Lorsque la paroi de formage 24 et/ou un élément de préhension 26 est placé(e) en-dessous du bras 38 de la mâchoire 36, la mâchoire 36 est configurée pour être déplacée vers la première partie 20 pour exercer une pression sur la paroi de formage 24 et/ou sur l'élément de préhension 26.

Dans ce premier mode de réalisation, l'étape d'application d'une pression complémentaire de formage comprend ainsi une étape de disposition du bras 38 de la mâchoire 36 au-dessus de la paroi de formage 24 et/ou au-dessus d'un élément de préhension 26 et une étape de déplacement de la mâchoire 36 vers la première partie 20.

Après la mise en forme de l'insert fibreux 14 et avant le déplacement du dispositif de préhension 18 à l'écart de la surface de moulage 22a de la première partie 20, le procédé comporte une étape de disposition de la mâchoire 36 à l'écart du dispositif de préhension 18.

Dans un deuxième mode de réalisation de cette variante non représenté, le système additionnel comprend au moins un vérin amovible apte à prendre appui sur la deuxième partie 21 du moule d'injection 17, disposée sensiblement au-dessus de la première partie 20, pour exercer une pression complémentaire sur le dispositif de préhension 18.

Plus précisément, le vérin est apte à prendre appui sur la surface de moulage 22b de la deuxième partie 21 et à exercer la pression complémentaire sur une surface extérieure de la paroi de formage 24, la surface extérieure étant opposée à la surface de formage 24.Le vérin est apte à être disposé à l'écart du dispositif de préhension 18 et de la deuxième partie 21 pour assurer un déplacement libre de la paroi de formage 24 et des éléments de préhension 26 par rapport à la première partie 20.

Dans ce deuxième mode de réalisation, l'étape d'application d'une pression complémentaire de formage est ainsi mise en oeuvre par le vérin.

Après la mise en forme de l'insert fibreux 14 et avant le déplacement du dispositif de préhension 18 à l'écart de la surface de moulage 22a de la première partie 20, le procédé comporte une étape de disposition du vérin à l'écart du dispositif de préhension 18 et de la deuxième partie 21.

## Revendications

1. Procédé de production d'une pièce (8), comportant au moins un élément de renfort (12) fabriqué à partir d'un insert fibreux (14) en matériau composite, utilisant un moule d'injection (17) comprenant une première partie (20) et une deuxième partie (21), chacune comprenant une surface de moulage (22a, 22b), lesdites surfaces de moulage (22a, 22b) définissant entre elles une cavité de moulage présentant la forme de la pièce (8) à produire, le procédé comprenant les étapes suivantes :
- transport et positionnement de l'insert fibreux (14) sur la première partie (20) du moule d'injection (17) par au moins un élément de préhension (26) d'un dispositif de préhension (18), le dispositif de préhension (18) comprenant en outre une paroi de formage (24), l'élément de préhension (26) étant actionnable entre une configuration inactive, dans laquelle il n'interagit pas avec l'insert fibreux (14), et une configuration active, dans laquelle il est apte à maintenir l'insert fibreux (14) sur le dispositif de préhension (18), l'élément de préhension (26) étant en configuration active au cours du transport et du positionnement ;
- mise en forme de l'insert fibreux (14) en l'élément de renfort (12) contre la surface de moulage (22a) de la première partie (20) ;
- injection d'un matériau plastique dans le moule d'injection (17), telle que l'élément de renfort (12) est surmoulé par le matériau plastique et la pièce (8) est produite ;
le procédé étant **caractérisé en ce qu'**il comprend les étapes suivantes :
au cours du positionnement de l'insert fibreux (14) sur la surface de moulage (22a) de la première partie (20) : approche de l'insert fibreux (14) de la surface de moulage (22a) de la première partie (20) en maintenant un écart entre ladite surface de moulage (22a) et l'insert fibreux (14) ; et déplacement de la paroi de formage (24) par rapport à l'élément de préhension (26) de sorte à appliquer l'insert fibreux (14) contre au moins une partie de la surface de moulage (22a) ; et,
au cours de la mise en forme de l'insert fibreux (14) : application de la paroi de formage (24) et de l'élément de préhension (26) contre l'insert fibreux (14) et la surface de moulage (22a) de la première partie (20), de sorte que l'insert fibreux (14) acquiert la forme de la surface de moulage (22a), l'élément de préhension (26) étant actionné de sa configuration active à sa configuration inactive avant ladite application de la paroi de formage (24).

2. Procédé selon l'une quelconque des revendications précédentes, comprenant une étape de maintien de l'insert fibreux (14) contre la surface de moulage (22a) de la première partie (20) du moule d'injection (17), ce maintien étant assuré par l'élément de préhension (26) avant l'étape de mise en forme, et par la paroi de formage (24) au cours de l'étape de mise en forme.

3. Procédé selon l'une quelconque des revendications précédentes, dans lequel la paroi de formage (24) présente une surface de forme sensiblement complémentaire d'au moins une partie de la surface de moulage (22a) de la première partie (20).

4. Procédé selon l'une quelconque des revendications précédentes, dans lequel l'élément de préhension (26) comporte un organe de préhension (30) de l'insert fibreux (14), mobile entre une position rétractée, dans la configuration inactive de l'élément de préhension (26), et une position de retenue, dans la configuration active de l'élément de préhension (26), l'organe de préhension (30) fixant l'insert fibreux (14) sur l'élément de préhension (26) en position de retenue.

5. Procédé selon l'une quelconque des revendications précédentes, comportant le transport et le positionnement d'au moins un insert métallique sur la surface de moulage (22a) de la première partie (20) de moule d'injection (17) avant le positionnement de l'insert fibreux (14) sur la surface de moulage (22a) de la première partie (20).

6. Procédé selon l'une quelconque des revendications précédentes, comportant une étape de régulation de la température du dispositif de préhension (18).

7. Procédé selon l'une quelconque des revendications précédentes, comportant le chauffage de l'insert fibreux (14) avant sa mise en forme, et le refroidissement de l'insert fibreux (14) après sa mise en forme et avant l'étape d'injection d'un matériau plastique dans le moule d'injection (17).

8. Procédé selon l'une quelconque des revendications précédentes, comportant, au cours de la mise en forme de l'insert fibreux (14), une étape d'application d'une pression de formage sur l'insert fibreux (14) par un système additionnel (36) d'application d'une pression complémentaire sur le dispositif de préhension (18).

9. Procédé selon l'une quelconque des revendications précédentes, dans lequel, au cours du positionnement de l'insert fibreux (14), l'insert fibreux (14) est maintenu à l'écart de la surface de moulage (22a) pendant le déplacement de la paroi de formage (24).

10. Procédé selon l'une quelconque des revendications précédentes, dans lequel, au cours du positionnement de l'insert fibreux (14), la région de l'insert fibreux (14) en regard de chaque élément de préhension (26) est maintenue à l'écart de la surface de moulage (22a) pendant le déplacement de la paroi de formage (24).

## Patentansprüche

1. Verfahren zur Herstellung eins Bauteils (8), aufweisend wenigstens ein Verstärkungselement (12), das ausgehend von einem Fasereinsatz (14) aus Verbundmaterial hergestellt wird, verwendend eine Spritzgießform (17) mit einem ersten Teil (20) und einem zweiten Teil (21), welche jeweils eine Formfläche (22a, 22b) aufweisen, wobei die Formflächen (22a, 22b) zwischen sich eine Formkavität definieren, die die Form des herzustellenden Bauteils (8) hat, wobei das Verfahren die folgenden Schritte aufweist:
- Transportieren und Positionieren des Fasereinsatzes (14) auf den ersten Teil (20) der Spritzgießform (17) mittels wenigstens eines Greifelements (26) einer Greifvorrichtung (18), wobei die Greifvorrichtung (18) ferner aufweist eine Umformungswand (24), wobei das Greifelement (26) betätigbar ist zwischen einer Inaktiv-Konfiguration, in welcher es nicht mit dem Fasereinsatz (14) interagiert, und einer Aktivkonfiguration, in welcher es imstande ist, den Fasereinsatz (14) an der Greifvorrichtung (18) zu halten, wobei das Greifelement (26) im Verlaufe des Transports und des Positionierens in Aktivkonfiguration ist,
- Formen des Fasereinsatzes (14) zu dem Verstärkungselement (12) gegen die Formfläche (22a) des ersten Teils (20),
- Einspritzen eines Kunststoffmaterials in die Spritzgießform (17), sodass das Verstärkungselement (12) von dem Kunststoffmaterial überformt wird und das Bauteil (8) hergestellt wird,
wobei das Verfahren **dadurch gekennzeichnet ist, dass** es die folgenden Schritte aufweist:
im Laufe des Positionierens des Fasereinsatzes (14) auf der Formfläche (22a) des ersten Teils (20): Annähern des Fasereinsatzes (14) an die Formfläche (22a) des ersten Teils (20) unter Aufrechterhalten eines Abstands zwischen der Formfläche (22a) und dem Fasereinsatz (14) und Verlagern der Umformungswand (24) bezüglich des Greifelements (26), um den Fasereinsatz (14) gegen wenigstens einen Teil der Formfläche (22a) anzulegen, und,
im Laufe des Formens des Fasereinsatzes (14): Ansetzen der Umformungswand (24) und des Greifmittels (26) gegen den Fasereinsatz (14) und die Formfläche (22a) des ersten Teils (20), sodass der Fasereinsatz (14) die Form der Formfläche (22a) annimmt, wobei das Greifmittel (26) vor dem besagten Ansetzen der Umformungswand (24) betätigt wird von seiner Aktivkonfiguration aus in seine Inaktivkonfiguration.

2. Verfahren gemäß irgendeinem der vorhergehenden Ansprüche, aufweisend einen Schritt des Aufrechterhaltens des Fasereinsatzes (14) gegen die Formfläche (22a) des ersten Teils (20) der Spritzgießform (17), wobei dieses Aufrechterhalten gewährleistet wird vor dem Schritt des Formens durch das Greifelement (26) und im Laufe des Schritts des Formens durch die Umformungswand (24).

3. Verfahren gemäß irgendeinem der vorhergehenden Ansprüche, wobei die Umformungswand (24) eine Fläche mit Form im Wesentlichen komplementär zu wenigstens einem Teil der Formfläche (22a) des ersten Teils (20) hat.

4. Verfahren gemäß irgendeinem der vorhergehenden Ansprüche, wobei das Greifelement (26) aufweist ein Organ zum Greifen (30) des Fasereinsatzes (14), das bewegbar ist zwischen einer Einfahrposition, in der Inaktivkonfiguration des Greifelements (26), und einer Rückhalteposition, in der Aktivkonfiguration des Greifelements (26), wobei das Greiforgan (30) in der Rückhalteposition den Fasereinsatz (14) an dem Greifelement (26) fixiert.

5. Verfahren gemäß irgendeinem der vorhergehenden Ansprüche, aufweisend das Transportieren und das Positionieren wenigstens eines Metalleinsatzes auf die Formfläche (22a) des ersten Teils (20) der Spritzgießform (17) vor dem Positionieren des Fasereinsatzes (14) auf der Formfläche (22a) des ersten Teils (20) .

6. Verfahren gemäß irgendeinem der vorhergehenden Ansprüche, aufweisend einen Schritt des Regulierens der Temperatur der Greifvorrichtung (18).

7. Verfahren gemäß irgendeinem der vorhergehenden Ansprüche, aufweisend das Erwärmen des Fasereinsatzes (14) vor dessen Formen, und das Abkühlen des Fasereinsatzes (14) nach dessen Formen und vor dem Schritt des Einspritzens eines Kunststoffmaterials in die Spritzgießform (17).

8. Verfahren gemäß irgendeinem der vorhergehenden Ansprüche, aufweisend, im Laufe des Formens des Fasereinsatzes (14), einen Schritt des Aufbringens eines Formungsdrucks auf den Fasereinsatz (14) durch ein Zusatzsystem (36) zur Aufbringung eines komplementären Drucks auf die Greifvorrichtung (18).

9. Verfahren gemäß irgendeinem der vorhergehenden Ansprüche, wobei, im Laufe des Positionierens des Fasereinsatzes (14), der Fasereinsatz (14) im Abstand von der Formfläche (22a) gehalten wird während des Verlagerns der Umformungswand (24).

10. Verfahren gemäß irgendeinem der vorhergehenden Ansprüche, wobei, im Laufe des Positionierens des Fasereinsatzes (14), der Bereich des Fasereinsatzes (14) gegenüber jedem Greifelement (26) im Abstand von der Formfläche (22a) gehalten wird während des Verlagerns der Umformungswand (24).

## Claims

1. A method for producing a part (8), comprising at least one reinforcing element (12) manufactured from a fibrous insert (14) made from a composite material, using an injection mold (17) comprising a first part (20) and a second part (21), each comprising a molding surface (22a, 22b), said molding surfaces (22a, 22b) defining a molding cavity between them having the form of the part (8) to be produced, the method comprising the following steps:
- transporting and positioning the fibrous insert (14) on the first part (20) of the injection mold (17) by at least one gripping element (26) of a gripping device (18), the gripping device (18) further comprising a shaping wall (24), the gripping element (26) being able to be actuated between an inactive configuration, in which it does not interact with the fibrous insert (14), and an active configuration, in which it is able to keep the fibrous insert (14) on the gripping device (18), the gripping element (26) being in the active configuration during the transport and positioning;
- shaping the fibrous insert (14) into the reinforcing element (12) against the molding surface (22a) of the first part (20);
- injecting a plastic material in the injection mold (17), such that the reinforcing part (12) is overmolded by the plastic material and the part (8) is produced;
the method being **characterized in that** it comprises the following steps:
during the positioning of the fibrous insert (14) on the molding surface (22a) of the first part (20): bringing the fibrous insert (14) closer to the molding surface (22a) of the first part (20) while maintaining a separation between said molding surface (22a) and the fibrous insert (14); and moving the shaping wall (24) relative to the gripping element (26) so as to apply the fibrous insert (14) against part of the molding surface (22a); and
during the shaping of the fibrous insert (14): applying the shaping wall (24) and the gripping element (26) against the fibrous insert (14) and the molding surface (22a) of the first part (20), such that the fibrous insert (14) acquires the shape of the molding surface (22a), the gripping element (26) being actuated from its active configuration to its inactive configuration before said application of the shaping wall (24).

2. The method according to any one of the preceding claims, comprising a step for maintaining the fibrous insert (14) against the molding surface (22a) of the first part (20) of the injection mold (17), this maintenance being done by the gripping element (26) before the shaping step, and by the shaping wall (24) during the shaping step.

3. The method according to any one of the preceding claims, wherein the shaping wall (24) has a surface with a shape substantially complementary to at least part of the molding surface (22a) of the first part (20).

4. The method according to any one of the preceding claims, wherein the gripping element (26) comprises a gripping member (30) for the fibrous insert (14), movable between a retracted position, in the inactive configuration of the gripping element (26), and a retaining position, in the active configuration of the gripping element (26), the gripping member (30) fixing the fibrous insert (14) on the gripping element (26) in the retaining position.

5. The method according to any one of the preceding claims, comprising transporting and positioning at least one metal insert on the molding surface (22a) of the first part (20) of the injection mold (17) before positioning the fibrous insert (14) on the molding surface (22a) of the first part (20).

6. The method according to any one of the preceding claims, comprising a step for regulating the temperature of the gripping device (18).

7. The method according to any one of the preceding claims, comprising heating the fibrous insert (14) before shaping it, and cooling the fibrous insert (14) after it is shaped and before the step for injecting a plastic material into the injection mold (17).

8. The method according to any one of the preceding claims, comprising, during the shaping of the fibrous insert (14), a step for applying shaping pressure on the fibrous insert (14) via an additional system (36) for applying an additional pressure on the gripping device (18).

9. The method according to any one of the preceding claims, wherein, during the positioning of the fibrous insert (14), the fibrous insert (14) is kept separated from the molding surface (22a) during the movement of the shaping wall (24).

10. The method according to any one of the preceding claims, wherein, during the positioning of the fibrous insert (14), the region of the fibrous insert (14) across from each gripping element (26) is kept separated from the molding surface (22a) during the movement of the shaping wall (24).
